# EUROPEAN PATENT APPLICATION

(11) **EP 4 708 748 A1**
(43) Date of publication of application: **11.03.2026**
(21) Application number: 23935939.1
(22) Date of filing: 05.05.2023
(51) Int. Cl.: H04L 5/00

(54) **DEMODULATION REFERENCE SIGNAL PORT INDICATION METHOD, APPARATUS, AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Gunzelmann, Rainer
(86) International application number: PCT/CN2023/092357
(87) International publication number: WO 2024/229610

(57) **Abstract**

The present disclosure relates to the technical field of communications. Disclosed are a demodulation reference signal port indication method, an apparatus, and a storage medium, which are used for improving the accuracy of channel estimation. The method comprises: receiving indication information, the indication information being used for indicating a demodulation reference signal (DMRS) port allocated by a network device to a terminal, wherein the DMRS port corresponds to a first-type DMRS or a second-type DMRS, and lengths of orthogonal cover codes (OCC) used by the first-type DMRS and the second-type DMRS in a frequency domain are different.

## Description

### TECHNICAL FIELD

The present disclosure relates to the field of wireless communication technology, and specifically to a method and an apparatus for indicating a demodulation reference signal (DMRS) port, and a storage medium.

### BACKGROUND

In new radio (NR) wireless communication technology, coherent joint transmission (CJT) based on multi transmission reception points (M-TRPs) is introduced. A network device may transmit by receiving or sending beams via multiple transmission reception points (TRPs), so as to provide services to a terminal.

When the network device provides services to the terminal via the TRP, it allocates a DMRS port for transmission to the terminal. However, for CJT using M-TRPs, how the network device allocates the DMRS port for transmission to the terminal remains an issue to be addressed.

### SUMMARY

To address the issue present in the related technology, the present disclosure provides a method and an apparatus for indicating a demodulation reference signal (DMRS) port, and a storage medium.

According to a first aspect of the embodiments of the present disclosure, a method for indicating a DMRS port is provided, performed by a terminal, including: receiving indication information, in which the indication information indicates the DMRS port allocated to the terminal by a network device; the DMRS port corresponds to a first type of DMRS or a second type of DMRS; and the first type of DMRS and the second type of DMRS use orthogonal cover codes (OCCs) of different lengths in a frequency domain.

In an implementation, the method further includes: receiving first information, in which the first information indicates the second type of DMRS, and the DMRS port corresponds to the second type of DMRS.

In an implementation, the first type of DMRS uses a second-order OCC in the frequency domain, and the second type of DMRS uses a fourth-order OCC in the frequency domain.

In an implementation, the indication information further indicates a DMRS port from different DMRS port tables, and the different DMRS port tables are determined based on a transmission scheme of the terminal.

In an implementation, the indication information includes second information and third information, the second information indicates a DMRS port table, and the third information indicates a DMRS port from the DMRS port table.

In an implementation, the transmission scheme includes a first transmission scheme, a second transmission scheme or a third transmission scheme; in which the first transmission scheme is a transmission scheme based on a single transmission-reception point (TRP); the second transmission scheme is a non-coherent joint transmission scheme based on multi TRPs (MTRPs), and different data layers are mapped to different TRPs in the non-coherent joint transmission scheme based on the MTRPs; and the third transmission scheme is a coherent joint transmission scheme based on MTRPs, and a same data layer is mapped to different TRPs in the coherent joint transmission scheme based on the MTRPs.

In an implementation, the first transmission scheme corresponds to a first DMRS port table, the second transmission scheme corresponds to a second DMRS port table, and the third transmission scheme corresponds to a third DMRS port table; or the first transmission scheme and the third transmission scheme correspond to a first DMRS port table, and the second transmission scheme corresponds to a second DMRS port table; or the first transmission scheme corresponds to a first DMRS port table, and the second transmission scheme and the third transmission scheme correspond to a second DMRS port table.

In an implementation, the second transmission scheme and the third transmission scheme correspond to the second DMRS port table; the indication information further includes fourth information, in which the fourth information indicates that the transmission scheme of the terminal is the second transmission scheme or the third transmission scheme.

In an implementation, the third information includes a DMRS port indication field; a number of bits of the DMRS port indication field is determined based on a DMRS port table indicated by the second information; or a number of bits of the DMRS port indication field is determined based on a preset number of bits; or a number of bits of the DMRS port indication field is configured by the network device.

In an implementation, the number of bits of the DMRS port indication field is determined based on the preset number of bits, or the number of bits of the DMRS port indication field is configured by the network device; the method further includes: receiving fifth information, in which the fifth information indicates an available number of rows of the DMRS port table from the DMRS port table, and a value indicated by the DMRS port indication field indicates a DMRS port from the available number of rows of the DMRS port table.

According to a second aspect of the embodiments of the present disclosure, a method for indicating a DMRS port is provided, performed by a network device, including: sending indication information, in which the indication information indicates the DMRS port allocated to a terminal; the DMRS port corresponds to a first type of DMRS or a second type of DMRS; and the first type of DMRS and the second type of DMRS use OCCs of different lengths in a frequency domain.

In an implementation, the method further includes: sending first information, in which the first information indicates the second type of DMRS, and the DMRS port corresponds to the second type of DMRS.

In an implementation, the first type of DMRS uses a second-order OCC in the frequency domain, and the second type of DMRS uses a fourth-order OCC in the frequency domain.

In an implementation, the indication information further indicates a DMRS port from different DMRS port tables, and the different DMRS port tables are determined based on a transmission scheme of the terminal.

In an implementation, the indication information includes second information and third information, the second information indicates a DMRS port table, and the third information indicates a DMRS port from the DMRS port table.

In an implementation, the transmission scheme includes a first transmission scheme, a second transmission scheme, or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on the MTRPs; and the third transmission scheme is a coherent joint transmission scheme based on MTRPs, and a same data layer is mapped to different TRPs in the coherent joint transmission scheme based on the MTRPs.

In an implementation, the first transmission scheme corresponds to a first DMRS port table, the second transmission scheme corresponds to a second DMRS port table, and the third transmission scheme corresponds to a third DMRS port table; or the first transmission scheme and the third transmission scheme correspond to a first DMRS port table, and the second transmission scheme corresponds to a second DMRS port table; or the first transmission scheme corresponds to a first DMRS port table, and the second transmission scheme and the third transmission scheme correspond to a second DMRS port table.

In an implementation, the first transmission scheme corresponds to the first DMRS port table, and the second transmission scheme and the third transmission scheme correspond to the second DMRS port table; the indication information further includes fourth information, in which the fourth information indicates that the transmission scheme of the terminal is the second transmission scheme or the third transmission scheme.

In an implementation, the third information includes a DMRS port indication field; a number of bits of the DMRS port indication field is determined based on a DMRS port table indicated by the second information; or a number of bits of the DMRS port indication field is determined based on a preset number of bits; or a number of bits of the DMRS port indication field is configured by the network device.

In an implementation, the number of bits of the DMRS port indication field is determined based on the preset number of bits, or the number of bits of the DMRS port indication field is configured by the network device; the method further includes: receiving fifth information, in which the fifth information indicates an available number of rows of the DMRS port table from the DMRS port table, and a value indicated by the DMRS port indication field indicates a DMRS port from the available number of rows of the DMRS port table.

According to a third aspect of the embodiments of the present disclosure, an apparatus for indicating a DMRS port is provided, including: a receiving module, configured to receive indication information, in which the indication information indicates the DMRS port allocated to the terminal by a network device; the DMRS port corresponds to a first type of DMRS or a second type of DMRS; and the first type of DMRS and the second type of DMRS use OCCs of different lengths in a frequency domain.

In an implementation, the receiving module is further configured to receive first information, in which the first information indicates the second type of DMRS, and the DMRS port corresponds to the second type of DMRS.

In an implementation, the first type of DMRS uses a second-order OCC in the frequency domain, and the second type of DMRS uses a fourth-order OCC in the frequency domain.

In an implementation, the indication information further indicates a DMRS port from different DMRS port tables, and the different DMRS port tables are determined based on a transmission scheme of the terminal.

In an implementation, the indication information includes second information and third information, the second information indicates a DMRS port table, and the third information indicates a DMRS port from the DMRS port table.

In an implementation, the transmission scheme includes a first transmission scheme, a second transmission scheme, or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on the MTRPs; and the third transmission scheme is a coherent joint transmission scheme based on MTRPs, and a same data layer is mapped to different TRPs in the coherent joint transmission scheme based on the MTRPs.

In an implementation, the first transmission scheme corresponds to a first DMRS port table, the second transmission scheme corresponds to a second DMRS port table, and the third transmission scheme corresponds to a third DMRS port table; or the first transmission scheme and the third transmission scheme correspond to a first DMRS port table, and the second transmission scheme corresponds to a second DMRS port table; or the first transmission scheme corresponds to a first DMRS port table, and the second transmission scheme and the third transmission scheme correspond to a second DMRS port table.

In an implementation, the first transmission scheme corresponds to the first DMRS port table, and the second transmission scheme and the third transmission scheme correspond to the second DMRS port table; the indication information further includes fourth information, in which the fourth information indicates that the transmission scheme of the terminal is the second transmission scheme or the third transmission scheme.

In an implementation, the third information includes a DMRS port indication field; a number of bits of the DMRS port indication field is determined based on a DMRS port table indicated by the second information; or a number of bits of the DMRS port indication field is determined based on a preset number of bits; or a number of bits of the DMRS port indication field is configured by the network device.

In an implementation, the receiving module is further configured to receive fifth information, in which the fifth information indicates an available number of rows of the DMRS port table from the DMRS port table, and a value indicated by the DMRS port indication field indicates a DMRS port from the available number of rows of the DMRS port table.

According to a fourth aspect of the embodiments of the present disclosure, an apparatus for indicating a DMRS port is provided, including: a sending module, configured to send indication information, in which the indication information indicates the DMRS port allocated to a terminal; the DMRS port corresponds to a first type of DMRS or a second type of DMRS; and the first type of DMRS and the second type of DMRS use OCCs of different lengths in a frequency domain.

In an implementation, the sending module is further configured to send first information, in which the first information indicates the second type of DMRS, and the DMRS port corresponds to the second type of DMRS.

In an implementation, the first type of DMRS uses a second-order OCC in the frequency domain, and the second type of DMRS uses a fourth-order OCC in the frequency domain.

In an implementation, the indication information further indicates a DMRS port from different DMRS port tables, and the different DMRS port tables are determined based on a transmission scheme of the terminal.

In an implementation, the indication information includes second information and third information, the second information indicates a DMRS port table, and the third information indicates a DMRS port from the DMRS port table.

In an implementation, the transmission scheme includes a first transmission scheme, a second transmission scheme, or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on the MTRPs; and the third transmission scheme is a coherent joint transmission scheme based on MTRPs, and a same data layer is mapped to different TRPs in the coherent joint transmission scheme based on the MTRPs.

In an implementation, the first transmission scheme corresponds to a first DMRS port table, the second transmission scheme corresponds to a second DMRS port table, and the third transmission scheme corresponds to a third DMRS port table; or the first transmission scheme and the third transmission scheme correspond to a first DMRS port table, and the second transmission scheme corresponds to a second DMRS port table; or the first transmission scheme corresponds to a first DMRS port table, and the second transmission scheme and the third transmission scheme correspond to a second DMRS port table.

In an implementation, the first transmission scheme corresponds to the first DMRS port table, and the second transmission scheme and the third transmission scheme correspond to the second DMRS port table; the indication information further includes fourth information, in which the fourth information indicates that the transmission scheme of the terminal is the second transmission scheme or the third transmission scheme.

In an implementation, the third information includes a DMRS port indication field; a number of bits of the DMRS port indication field is determined based on a DMRS port table indicated by the second information; or a number of bits of the DMRS port indication field is determined based on a preset number of bits; or a number of bits of the DMRS port indication field is configured by the network device.

In an implementation, the sending module is configured to send fifth information, in which the fifth information indicates an available number of rows of the DMRS port table from the DMRS port table indicated by the second information, and a value indicated by the DMRS port indication field indicates a DMRS port from the available number of rows of the DMRS port table.

According to a fifth aspect of the embodiments of the present disclosure, an apparatus for indicating a DMRS port is provided, including: a processor; and a memory for storing processor-executable instructions, in which the processor is configured to implement the method as described in the first aspect or the second aspect and any one of the implementations.

According to a sixth aspect of the embodiments of the present disclosure, a storage medium is provided. The storage medium stores instructions. When the instructions in the storage medium are executed by a processor of a terminal, the terminal is enable to implement the method according to the above first aspect and any one of the implementations; or when the instructions in the storage medium are executed by a processor of a network device, the network device is enable to implement the method according to the above second aspect and any one of the implementations.

According to a seventh aspect of the embodiments of the present disclosure, a communication system is provided, including a terminal and a network device, in which the terminal is configured to implement the method according to the above first aspect and any one of the implementations; the network device is configured to implement the method according to the above second aspect and any one of the implementations.

The technical solution provided by the embodiments of the present disclosure may include following beneficial effects: by receiving the indication information, the terminal determines the DMRS port of the first type of DMRS or the second type of DMRS allocated to the terminal by the network device, so that the terminal may determine a DMRS port used for transmitting data, thus correctly performing channel estimation and performing data demodulation, and improving accuracy of the channel estimation.

The above general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, explain the principles of the present disclosure.
FIG. 1 is a schematic diagram of a wireless communication system according to an exemplary embodiment.
FIG. 2 is a flowchart of a method for indicating a DMRS port according to an exemplary embodiment.
FIG. 3 is a flowchart of a method for indicating a DMRS port according to an exemplary embodiment.
FIG. 4 is a flowchart of a method for indicating a DMRS port according to an exemplary embodiment.
FIG. 5 is a block diagram of an apparatus for indicating a DMRS port according to an exemplary embodiment.
FIG. 6 is a block diagram of an apparatus for indicating a DMRS port according to an exemplary embodiment.
FIG. 7 is a block diagram of an apparatus for indicating a DMRS port according to an exemplary embodiment.
FIG. 8 is a block diagram of an apparatus for indicating a DMRS port according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure.

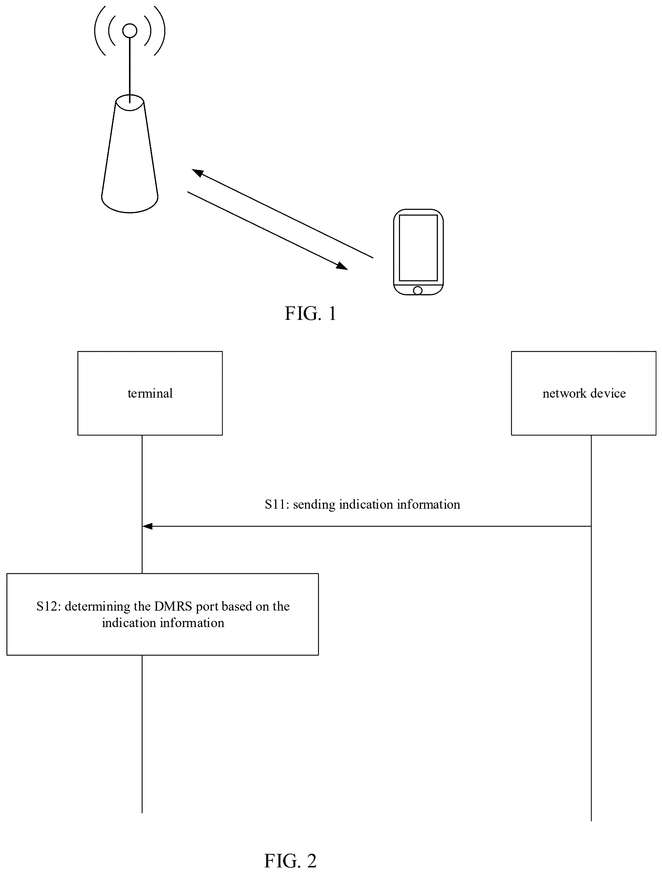

A method for indicating a DMRS port in the embodiments of the present disclosure may be applied to a wireless communication system shown in FIG. 1. As shown in FIG. 1, the wireless communication system includes a network device and a terminal. The terminal connects to the network device via a wireless resource and performs data transmission.

It may be understood that the wireless communication system shown in FIG. 1 is provided for illustrative purposes only. The wireless communication system may also include other network devices, such as a core network device, a wireless relay device, and a wireless backhaul device, which are not shown in FIG. 1. Embodiments of the present disclosure do not limit the number of network devices or terminals included in the wireless communication system.

It may be further understood that the wireless communication system in the embodiments of the present disclosure is a network providing a wireless communication function. The wireless communication system may employ various communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access with collision avoidance. based on factors such as capacity, data rate, latency, networks may be categorized into 2G (generation) networks, 3G networks, 4G networks, or future evolved networks, such as 5G networks. The 5G network may also be referred to as a new radio (NR) network. For convenience of description, the wireless communication network may sometimes be simply referred to as "network" in the present disclosure.

Furthermore, the network device mentioned in the present disclosure may also be called a radio access network device. This radio access network device may include: a base station, an evolved Node B (eNB), a home base station, an access point (AP) in a wireless fidelity (Wi-Fi) system, a wireless relay node, a wireless backhaul node, a transmission point (TP), or a transmission and reception point (TRP). It may also be a next generation node B (gNB) in an NR system or a component or a part of a base station. It may be understood that the embodiments of the present disclosure do not limit a detailed technology or a detailed device form adopted by the network device. In the present disclosure, the network device may provide communication coverage for a specific geographic area and communicate with a terminal located in a coverage area (cell). Moreover, the network device may also be a vehicle-mounted device in a vehicle-to-everything (V2X) communication system.

Furthermore, the terminal mentioned in the present disclosure may also be called a terminal device, a user equipment (UE), a mobile station (MS), a mobile terminal (MT) or the like. The terminal is a device that provides speech and/or data connectivity to a user. For example, the terminal may be a handheld device or a vehicle-mounted device with a wireless connection function. At present, an example of the terminal includes a mobile phone, a customer premise equipment (CPE), a pocket personal computer (PPC), a palmtop computer, a personal digital assistant (PDA), a laptop, a tablet, a wearable device, a vehicle-mounted device or the like. In addition, in the V2X communication system, the terminal may also be the vehicle-mounted device. The embodiments of the present disclosure do not limit a detailed technology and a detailed device form adopted by the terminal.

When the network device schedules data, such as physical downlink shared channel (PDSCH) data or physical uplink shared channel (PUSCH) data, the network device needs to indicate a corresponding DMRS port for channel estimation and data demodulation.

Currently, the network device supports indicating the DMRS port for the terminal in non-coherent joint transmission (NC-JT) of a single transmission reception point (STRP) and in NC-JT of multi transmission reception points (MTRPs).

In an implementation, the network device indicates an allocated DMRS port for the terminal via an antenna port indication field in downlink control information (DCI).

In an implementation, a correspondence between a value of the antenna port field and the DMRS port is pre-designed. Hereinafter, the correspondence between the value of the antenna port field and the DMRS port is referred to as a DMRS port table.

For example, as shown in Table 1, Table 1 shows the correspondence between the values of the antenna port field and the DMRS ports when the type of DMRS is 1 and the symbol is single. For example, when the value of the antenna port field is 7, the DMRS port allocated to the terminal by the network device are {port 0, port 1}.

**Table 1**

| Codepoint(Value) | Number of DMRS CDM group(s) without data | DMRS port(s) |
|---|---|---|
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

In an NC-JT scenario of the STRP and an NC-JT scenario of the MTRP, the network device indicates an allocated DMRS port for the terminal via the antenna port field. In an existing protocol, the DMRS port table includes a DMRS port table for the STRP and a DMRS port table for the MTRP. Specifically, whether to use the DMRS port table for the STRP or the DMRS port table for the MTRP is distinguished by whether a certain codepoint in an activated TCI state corresponds to two TCI states.

In an implementation, in an NC-JT scenario of the MTRP, if all codepoints of a TCI field in DCI are activated with only one TCI state, the DMRS port table of the STRP is used; if a codepoint of the TCI field in the DCI is activated with two TCI states, the DMRS port table of the MTRP is used.

Based on the above, the network device only supports indicating the DMRS port for the terminal in the NC-JT scenario of the STRP and the MTRP. However, in new radio (NR) technology, coherent joint transmission (CJT) based on M-TRPs is introduced. In the CJT scenario, support for joint scheduling of more terminals and multi-user multiple-input multiple-output (MU-MIMO) for more terminals is provided. Compared to the NC-JT, the CJT achieves greater system gain.

Currently, MU-MIMO supports up to 12 DMRS ports, meaning the maximum number of supported DMRS ports is 12. Hereinafter, for convenience of description, a DMRS supporting up to 12 DMRS ports is referred to as the first type of DMRS.

Therefore, for a terminal in CJT scenario supporting MTRP, in order to support MU-MIMO of more terminals, more DMRS ports must be supported, that is, enhancing the first type of DMRS.

In an implementation, an enhanced DMRS and the first type of DMRS use orthogonal cover codes (OCCs) of different lengths in a frequency domain. An OCC length used by the second type of DMRS in the frequency domain is greater than that used by the first type of DMRS in the frequency domain.

In the embodiments of the present disclosure, after enhancing the first type of DMRS, an DMRS whose OCC length used in the frequency domain is greater than the OCC length used by the first type of DMRS in the frequency domain is called the second type of DMRS.

In an implementation, an order of the OCC used by the second type of DMRS in the frequency domain is higher than an order of the OCC used by the first type of DMRS in the frequency domain. For example, the first type of DMRS uses a second-order OCC in the frequency domain, and the second type of DMRS uses a fourth-order OCC in the frequency domain.

In an implementation, a maximum number of the DMRS ports supported by the second type of DMRS is greater than a maximum number of the DMRS ports supported by the first type of DMRS. For example, in the embodiments of the present disclosure, the maximum number of the DMRS ports corresponding to the second type of DMRS is 24, and the maximum number of the DMRS ports corresponding to the first type of DMRS is 12.

In the embodiments of the present disclosure, in a case the terminal supports the second type of DMRS, the terminal supports different transmission schemes, for example, a transmission scheme of a single TRP, a transmission scheme of the CJT of the MTRP, and a transmission scheme of the NC-JT of MTRP. For the CJT scenario of MTRP, up to 4 TRPs may be supported, and up to 2 TCI states may be indicated. Therefore, for the CJT of the MTRP, the network device may indicate one TCI state or two TCI states. In this case, a situation may arise where the CJT of MTRP and the CJT of STRP or MTRP, and the NC-JT of MTRP may not be distinguished. That is, in the CJT scenario of MTRP, for the enhanced DMRS, the terminal and the network device may not determine which DMRS port table to use to determine the DMRS port.

Based on this, the embodiments of the present disclosure provide a method for indicating a DMRS port. The DMRS port of the first type of DMRS or the second type of DMRS allocated to the terminal by the network device is indicated via the indication information, which enables the terminal to determine the DMRS port used for data transmission, thus correctly performing channel estimation and data demodulation.

FIG. 2 is a flowchart of a method for indicating a demodulation reference signal (DMRS) port according to an exemplary embodiment. As shown in FIG. 2, the method for indicating a DMRS port is used in a communication system and includes following steps at S11 to S12.

At S11, a network device sends indication information to a terminal.

In some embodiments, the indication information is configured to indicate a DMRS port allocated to the terminal by the network device.

In some embodiments, the DMRS port corresponds to a first type of DMRS or a second type of DMRS.

At S12, the terminal determines the DMRS port based on the indication information.

In the embodiments of the present disclosure, by receiving the indication information, the terminal determines the DMRS port of the first type of DMRS or the second type of DMRS allocated to the terminal by the network device, which enables the terminal to determine the DMRS port used for transmitting data, thus correctly performing channel estimation and data demodulation, and improving accuracy of the channel estimation.

In the method for indicating a DMRS port provided by the embodiments of the present disclosure, the network device indicates the DMRS is the first type of DMRS or the second type of DMRS to the terminal by sending first information to the terminal, which enables the terminal to determine that a current DMRS is the first type of DMRS or the second type of DMRS based on the first information.

Optionally, the first information is carried in a medium access control control element (MAC-CE) or a radio resource control (RRC) signaling.

In an implementation, 1 bit is set in the first information, indicating whether the DMRS is the first type of DMRS or the second type of DMRS via different values. For example, when the value of the first information is 0, it indicates that the DMRS is the first type of DMRS; when the value of the first information is 1, it indicates that the DMRS is the second type of DMRS.

The following embodiments of the present disclosure explain how the terminal determines the DMRS port of the second type of DMRS allocated by the network device when the first information indicates that the DMRS is the second type of DMRS.

In a method for indicating a DMRS port provided by the embodiments of the present disclosure, the indication information is configured to indicate the DMRS port allocated to the terminal by the network device from different DMRS port tables.

In some embodiments, the indication information includes second information and third information. Optionally, the second information is carried in an RRC signaling, MAC CE, or DCI information. Optionally, the third information is carried in DCI information. Optionally, the third information is carried in an antenna port indication field of a DCI, such as a DMRS port indication field.

In some embodiments, the second information is configured to indicate the DMRS port table, and the third information is configured to indicate the DMRS port from the DMRS port table.

In an implementation, the DMRS port table includes one or more of: a plurality of codepoints (values), the number of code division multiplexing (CDM) groups corresponding to a DMRS when there is no data transmission, DMRS ports corresponding to different values, the number of front-load symbols, and the number of values.

In a method for indicating a DMRS port provided by the embodiments of the present disclosure, different DMRS port tables are determined based on a transmission scheme of the terminal.

In the embodiments of the present disclosure, a DMRS indicated by the first information is the second type of DMRS. Since the terminal under the second type of DMRS supports more DMRS ports, a DMRS port table corresponding to the first type of DMRS is no longer applicable to the second type of DMRS. Therefore, it is necessary to redesign the DMRS port table according to different transmission schemes of the terminal.

In some embodiments, the transmission scheme of the terminal includes a transmission scheme based on STRP and a transmission scheme based on MTRP.

In some embodiments, for the second type of DMRS, under each transmission scheme, there are four corresponding DMRS port tables, including: a DMRS port table when a DMRS type is DMRS type 1 and a maximum length is 1; a DMRS port table when a DMRS type is DMRS type 1 and a maximum length is 2; a DMRS port table when a DMRS type is DMRS type 2 and a maximum length is 1; and a DMRS port table when a DMRS type is DMRS type 2 and a maximum length is 2.

In some embodiments, the number of values included in different DMRS port tables varies, and the combination of DMRS port(s) corresponding to the same value differs across different DMRS port tables.

For example, for the second type of DMRS, in a case of a STRP transmission scheme, a DMRS port table for the case where the DMRS type is DMRS type 1 and a single symbol is occupied may be as shown in Table 2 below.

**Table 2**

| One Codeword: Codeword 0 enabled, Codeword 1 disabled | | | | | Two Codewords: Codeword 0 enabled, Codeword 1 enabled | | | |
|---|---|---|---|---|---|---|---|---|
| Value | Number of DMRS CDM group(s) without data | DMRS port(s) | Number of front-load symbols | | Value | Number of DMRS CDM group(s) without data | DMRS port(s) | Number of front-load symbols |
| 0 | | | | | 0 | | | |
| ... | | | | | ... | | | |
| q | | | | | q | | | |
| ... | | | | | | | | |
| m | | | | | | | | |

It needs to be noted that Table 2 is exemplary. Table 2 does not show a specific correspondence between each value and the DMRS port, which is not limited in the embodiments of the present disclosure.

For another example, for the second type of DMRS, in a case of the MTRP transmission scheme, a DMRS port table for the case where the DMRS type is dmrs type 2 and a single symbol is occupied may be as shown in Table 3 below.

**Table 3**

| One Codeword: Codeword 0 enabled, Codeword 1 disabled | | | | | Two Codewords: Codeword 0 enabled, Codeword 1 enabled | | | |
|---|---|---|---|---|---|---|---|---|
| Value | Number of DMRS CDM group(s) without data | DMRS port(s) | Number of front-load symbols | | Value | Number of DMRS CDM group(s) without data | DMRS port(s) | Number of front-load symbols |
| 0 | | | | | 0 | | | |
| ... | | | | | ... | | | |
| p | | | | | p | | | |
| ... | | | | | | | | |
| i | | 0,2,3 | | | | | | |
| ... | | | | | | | | |
| m | | | | | | | | |

It needs to be noted that Table 3 is exemplary. Table 3 does not show a specific correspondence between each value and the DMRS port, which is not limited in the embodiments of the present disclosure.

In some embodiments, the transmission scheme based on the MTRP includes two transmission schemes: MTRP NC-JT and MTRP CJT.

In the MTRP NC-JT transmission scheme, different data layers of the network device are mapped to different TRPs. For example, if the network device transmits data across two data layers and sends those under two TRPs, the data transmitted by a first data layer is sent by a first TRP, and data transmitted by a second data layer is sent by a second TRP. In the MTRP CJT transmission scheme, a same data layer of the network device map mapped to different TRPs. For example, if the network device transmits data across two data layers and sends data under two TRPs, the data transmitted by a first data layer will map to both TRPs and be sent by both TRPs, and the data transmitted by a second data layer will map to both TRPs and be sent by both TRPs.

In the following embodiments of the present disclosure, for convenience of description, a transmission scheme based on STRP is referred to as a first transmission scheme. A transmission scheme based on MTRP NC-JT is referred to as a second transmission scheme. A transmission scheme based on MTRP CJT is referred to as a third transmission scheme.

In some embodiments, a DMRS port table corresponding to the first transmission scheme may refer to the DMRS port table shown in Table 2, and a DMRS port table corresponding to the second transmission scheme may refer to the DMRS port table shown in Table 3. ADMRS port table corresponding to the third transmission scheme is discussed in following methods in the embodiments of the present disclosure.

Method 1: Different transmission schemes correspond to different DMRS port tables.

In some embodiments, DMRS port tables are designed for the first transmission scheme, the second transmission scheme, and the third transmission scheme, respectively.

For example, the first transmission scheme corresponds to a first DMRS port table, the second transmission scheme corresponds to a second DMRS port table, and the third transmission scheme corresponds to a third DMRS port table. The first DMRS port table may refer to the DMRS port table shown in Table 2, the second DMRS port table may refer to the DMRS port table shown in Table 3, and the third DMRS port table may also refer to the DMRS port table shown in Table 2. However, the number of values corresponding to the first DMRS port table, the second DMRS port table, and the third DMRS port table differs respectively.

In an implementation, the first DMRS port table, the second DMRS port table, and the third DMRS port table have different numbers of values, and the number of CDM groups and DMRS ports corresponding to different values may be the same or different.

For example, the number of values of the first DMRS port table is 48, the number of values of the second DMRS port table is 49, and the number of values of the third DMRS port table is 64.

In some embodiments, the terminal determines a currently used DMRS port table based on the indication information, and determines a currently used DMRS port from the currently used DMRS port table via the indication information.

For example, the first transmission scheme corresponds to the first DMRS port table, the second transmission scheme corresponds to the second DMRS port table, the third transmission scheme corresponds to the third DMRS port table, a DMRS port table indicated by the indication information is the second DMRS port table, and the indication information indicates a DMRS port corresponding to value 7 in the second DMRS port table as a currently used DMRS port of the terminal.

In an implementation, the terminal may implicitly determine the transmission scheme of the terminal based on the indication information.

For example, the first transmission scheme corresponds to the first DMRS port table, the second transmission scheme corresponds to the second DMRS port table, and the third transmission scheme corresponds to the third DMRS port table. In one example, If the DMRS port table indicated by the indication information is the first DMRS port table, the terminal may implicitly determine that the transmission scheme of the terminal is the first transmission scheme based on the indication information. If the DMRS port table indicated by the indication information is the second DMRS port table, the terminal may implicitly determine that the transmission scheme of the terminal is the second transmission scheme based on the indication information. If the DMRS port table indicated by the indication information is the third DMRS port table, the terminal may implicitly determine that the transmission scheme of the terminal is the third transmission scheme based on the indication information.

In the embodiments of the present disclosure, the terminal does not need to consider the number of TCI states indicated by the network device. Regardless of whether the number of the TCI states indicated by the network device is 1 or 2, the terminal may determine the currently used DMRS port table and the DMRS port based on the indication information, and may also implicitly determine the current transmission scheme of the terminal.

Method 2: The first transmission scheme and the third transmission scheme correspond to a first DMRS port table, and the second transmission scheme corresponds to a second DMRS port table.

The number of values corresponding to the first DMRS port table and the second DMRS port table differs, and the number of CDM groups and DMRS ports corresponding to different values may be the same or different.

For example, the first DMRS port table may refer to the DMRS port table shown in Table 2, and the second DMRS port table may refer to the DMRS port table shown in Table 3. However, the number of values corresponding to the first DMRS port table and the second DMRS port table differs.

In an implementation, the number of values of the first DMRS port table and the second DMRS port table differs, and the number of CDM groups and DMRS ports corresponding to different values may be the same or different.

In an implementation, the number of values of the second DMRS port table is greater than the number of values of the first DMRS port table. For example, the number of values of the first DMRS port table is 48, and the number of values of the second DMRS port table is 49.

In some embodiments, the first transmission scheme and the third transmission scheme share a single DMRS port table. In this case, the third transmission scheme may be equivalent to the first transmission scheme, and the terminal need not to determine whether a current transmission scheme is the first transmission scheme or the third transmission scheme. However, for the third transmission scheme, the network device may indicate either one TCI state or two TCI states. If the network device indicates two TCI states, new signaling (such as the indication information in the embodiments of the present disclosure) must be introduced to indicate to the terminal which DMRS port table corresponding to which transmission scheme should be use.

For example, if the network device indicates one TCI state, the terminal defaults to using the first DMRS port table and determines a DMRS port from the first DMRS port table.

For another example, if the network device indicates two TCI states, the transmission scheme of the terminal at this time may be the second transmission scheme or the third transmission scheme. The terminal may not determine whether to use the second DMRS port table corresponding to the second transmission scheme or the first DMRS port table corresponding to the third transmission scheme. Therefore, a new signaling (such as the indication information in the embodiments of the present disclosure) must be introduced to indicate to the terminal whether the terminal whether to use the first DMRS port table or the second DMRS port table. The DMRS port is determined via a DMRS port table indicated by the indication information, and the transmission scheme of the terminal is implicitly determined via the DMRS port table indicated by the indication information. For example, if the indication information indicates the terminal to determine the DMRS port from the first DMRS port table, it implicitly indicates that the transmission scheme of the terminal is the third transmission scheme.

Method 3: The first transmission scheme corresponds to a first DMRS port table, and the second transmission scheme and the third transmission scheme correspond to a second DMRS port table.

The number of values corresponding to the first DMRS port table and the second DMRS port table differs, and a number of CDM groups and DMRS ports corresponding to different values may be the same or different.

For example, the first DMRS port table may refer to the DMRS port table shown in Table 2, and the second DMRS port table may refer to the DMRS port table shown in Table 3. However, the number of values corresponding to the first DMRS port table and the second DMRS port table differs.

In an implementation, the number of values of the first DMRS port table and the second DMRS port table differs, and the number of CDM groups and DMRS ports corresponding to different values may be the same or different.

In an implementation, the number of values of the second DMRS port table is greater than the number of values of the first DMRS port table. For example, the number of values of the first DMRS port table is 48, and the number of values of the second DMRS port table is 49.

In some embodiments, the second transmission scheme and the third transmission scheme share a single DMRS port table. For the third transmission scheme, the network device may indicate one TCI state or two TCI states. If the network device indicates one TCI state, in order to distinguish the first transmission scheme from the third transmission scheme, a new signaling (for example, the indication information in the embodiments of the present disclosure) must be introduced to indicate the terminal a DMRS port table corresponding to which transmission scheme to use. If the network device indicates two TCI states, although the second transmission scheme and the third transmission scheme correspond to the same table, the mapping relationship between the TCI state and the DMRS port differs under different transmission schemes. Therefore, in order to distinguish between the second transmission scheme and the third transmission scheme, new signaling is required to indicate the transmission scheme of the terminal.

For example, if the network device indicates one TCI state, the transmission scheme of the terminal at this time may be the first transmission scheme or the third transmission scheme. The terminal may not determine whether to use the first DMRS port table corresponding to the first transmission scheme or the second DMRS port table corresponding to the third transmission scheme. Therefore, a new signaling (i,e,, the indication information in the embodiments of the present disclosure) must be introduced to indicate the terminal whether to use the first DMRS port table or the second DMRS port table. The indication information indicates the terminal to determine the DMRS port from a certain DMRS port table. For example, if the indication information indicates the terminal to determine the DMRS port from the first DMRS port table, it implicitly indicates that the transmission scheme of the terminal is the first transmission scheme.

For another example, if the network device indicates two TCI states, the transmission scheme of the terminal at this time may be the second transmission scheme or the third transmission scheme. Although the second transmission scheme and the third transmission scheme correspond to the same DMRS port table, the mapping relationship between the TCI state and the DMRS port differs under different transmission schemes. For example, a DMRS port indicated by the indication information is (0,1,2). For NC-JT, a first TCI state corresponds to (0,1), and a second TCI state corresponds to (2). But for CJT, each DMRS port is mapped to each TCI state. Therefore, it is still necessary to introduce a new signaling to indicate the transmission scheme of the terminal, for example, to determine whether the transmission scheme of the terminal is the second transmission scheme or the third transmission scheme based on a fourth information sent by the network device. Further, the terminal determines the DMRS port table and a specific transmission scheme based on the indication information, and determines the DMRS port according to the DMRS port table and the specific transmission scheme.

For another example, the DMRS port table is determined based on a fourth information sent by the network device. Regardless of whether the number of TCI states indicated by the network device is 1 or 2, when the fourth information indicates that the transmission scheme of the terminal is the second transmission scheme, the DMRS table is the second DMRS port table.

The fourth information may be carried in an RRC signaling or DCI, which is not limited in the embodiments of the present disclosure. The fourth information indicates whether the transmission scheme of the terminal is the second transmission scheme or the third transmission scheme.

In some embodiments, the fourth information indicates the transmission scheme of the terminal through different bit values.

For example, when a bit value of the fourth information is 1, it indicates that the transmission scheme of the terminal is the second transmission scheme; when a bit value of the fourth information is 0, it indicates that the transmission scheme of the terminal is the third transmission scheme.

In a method for indicating a DMRS port provided by the embodiments of the present disclosure, the indication information indicates, from the DMRS port table, a DMRS port allocated to the terminal by the network device.

In some embodiments, the indication information includes second information and third information. Optionally, the second information is carried in an RRC signaling, MAC CE, or DCI information. Optionally, the third information is carried in DCI. Optionally, the third information is carried in an antenna port indication field of the DCI, for example, a DMRS port indication field.

In an implementation, the second information indicates the DMRS port table, and the third information indicates a DMRS port from the DMRS port table.

In some embodiments, if the network device indicates the DMRS port via the third information, the third information includes the DMRS port indication field, and the DMRS port is indicated in a DMRS port table indicated by the second information via a value indicated by the DMRS port indication field.

In some embodiments, the number of bits of the DMRS port indication field is determined based on the DMRS port table indicated by the second information.

In an implementation, M bits are added to the DMRS port indication field indicating the first type of DMRS, so that the DMRS port indication field after adding the M bits may indicate all DMRS ports in the DMRS port tables.

A DMRS port indication field of the first type of DMRS is a DMRS port indication field already adopted in the related art, which is not limited in the embodiments of the present disclosure.

In some embodiments, the number of bits of the DMRS port indication field is determined based on a preset number of bits.

In an implementation, the preset number of bits are added tothe DMRS port indication field of the first type of DMRS. For example, the preset number of bits is 1 bit.

In an implementation, it is determined whether the DMRS port indication field after adding the preset number of bits may indicate all DMRS ports in the DMRS port table.

Optionally, if the DMRS port indication field after adding the preset number of bits may indicate all DMRS ports in the DMRS port table, the DMRS port indication field indicates the DMRS port from the DMRS port table.

Optionally, if the DMRS port indication field after adding the preset number of bits can not indicate all DMRS ports in the DMRS port table, consider introducing a new signaling to indicate an available number of rows of the DMRS port table from the DMRS port table. The network device indicates a DMRS port in the available number of rows of the DMRS port table via the DMRS port indication field.

In some embodiments, the number of bits of the DMRS port indication field is configured by the network device.

In an implementation, the network device configures the number of bits of the DMRS port indication field for the terminal, for example, adding X bits. When the DMRS port indication field after adding the X bits can indicate all DMRS ports in the DMRS port table, the DMRS port is indicated from the DMRS port table via the DMRS port indication field after adding the X bits. When the DMRS port indication field after adding the X bits cannot indicate all DMRS ports in the DMRS port table, the network device indicates the available number of rows of the DMRS port table from the DMRS port table by introducing a new signaling, and the network device indicates the DMRS port in the available number of rows of the DMRS port table via the DMRS port indication field. In some embodiments, the new signaling is the fifth information, the network device indicates the available number of rows of the DMRS port table from the DMRS port table by sending the fifth information, and the value indicated by the DMRS port indication field indicates the DMRS port from the available number of rows of the DMRS port table.

Optionally, the fifth information is carried in a DCI signaling, an RRC signaling, or an MAC-CE signaling, which is not limited in the embodiments of the present disclosure.

Optionally, the fifth information indicates a starting row number of the available number of rows. The available number of rows of the DMRS port table is calculated starting from a starting row number indicated by the fifth information, and the value indicated by the DMRS port indication field indicates the DMRS port from a row starting from the starting row number downwards.

For example, in a case the DMRS port table includes 94 rows and the network device indicates the starting row number as 16 via the fifth information, the value indicated by the DMRS port indication field indicates the DMRS port from a row starting from the 16th row downwards in the DMRS port table.

Optionally, the fifth information indicates a starting row number and an ending row number of the available number of rows. The available number of rows is rows between the starting row number and the ending row number indicated by the fifth information, and the value indicated by the DMRS port indication field indicates the DMRS port between the starting row number and the ending row number in the DMRS port table.

For example, in a case the DMRS port table includes 94 rows and the network device indicates the starting row number as 16 and the ending row number as 64 via the fifth information, the value indicated by the DMRS port indication field indicates the DMRS port between the 16th row and the 64th row in the DMRS port table.

Optionally, the fifth information indicates the starting row number and the number of rows of the available number of rows. The available number of rows is a starting row number plus a number of rows indicated by the fifth information, and the value indicated by the DMRS port indication field indicates the DMRS port from rows between the starting row number and the starting row number plus the available number of rows in the DMRS port table.

For example, in a case the DMRS port table includes 94 rows and the network device indicates the starting row number as 16 and the number of rows as 32 via the fifth information, the value indicated by the DMRS port indication field indicates the DMRS port between the 16th row and the 48th row in the DMRS port table.

In the embodiments of the present disclosure, by determining the number of bits of the DMRS port indication field, this prevents excessive signaling overhead caused by an excessively large number of bits in the DMRS port indication field.

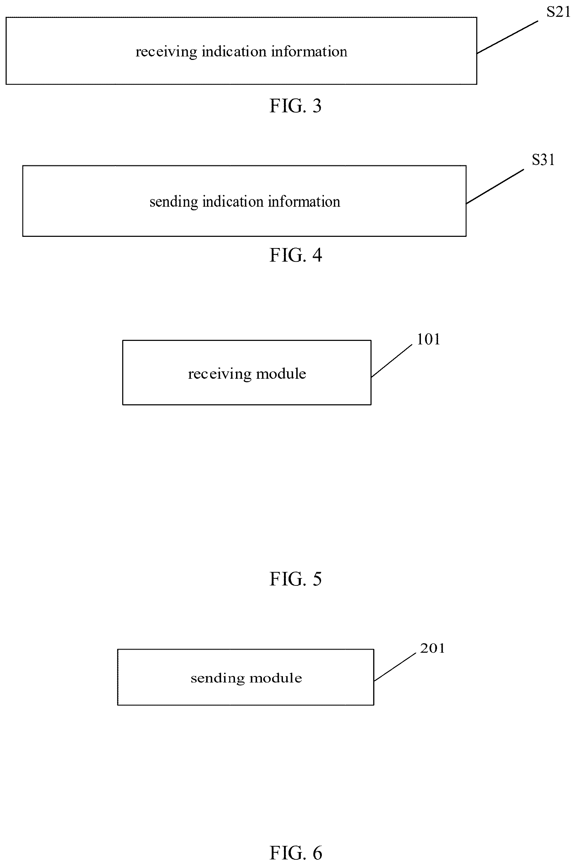

FIG. 3 is a flowchart of a method for indicating a DMRS port according to an exemplary embodiment. As shown in FIG. 3, the method for indicating a DMRS port is implemented in a terminal and includes a following step at S21.

At S21, indication information is received.

For an optional implementation of S21, reference may be made to optional implementations of S11 and S12 in FIG. 2, and other related parts in the embodiments associated with FIG. 2, which will not be repeated here.

In some embodiments, the indication information indicates a DMRS port allocated to the terminal by the network device.

In some embodiments, the DMRS port corresponds to a first type of DMRS or a second type of DMRS.

In some embodiments, the first type of DMRS and the second type of DMRS use different OCC lengths in the frequency domain.

In some embodiments, first information is received, and the first information indicates that the DMRS is the second type of DMRS.

In some embodiments, the first type of DMRS uses a second-order OCC in the frequency domain, and the second type of DMRS uses a fourth-order OCC in the frequency domain.

In some embodiments, the indication information indicates a DMRS port from different DMRS port tables, and the different DMRS port tables are determined based on a transmission scheme of the terminal.

In some embodiments, the indication information includes second information and third information, the second information indicates a DMRS port table, and the third information indicates a DMRS port from the DMRS port table.

**In** some embodiments, the transmission scheme includes a first transmission scheme, a second transmission scheme or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on MTRPs; and the third transmission scheme is a coherent joint transmission scheme based on MTRPs, and a same data layer is mapped to different TRPs in the coherent joint transmission scheme based on MTRPs.

In some embodiments, the first transmission scheme corresponds to a first DMRS port table, the second transmission scheme corresponds to a second DMRS port table, and the third transmission scheme corresponds to a third DMRS port table.

In some embodiments, the first transmission scheme and the third transmission scheme correspond to a first DMRS port table, and the second transmission scheme corresponds to a second DMRS port table.

In some embodiments, the first transmission scheme corresponds to a first DMRS port table, and the second transmission scheme and the third transmission scheme correspond to a second DMRS port table.

In some embodiments, the indication information includes fourth information, in which the fourth information indicates that the transmission scheme of the terminal is the second transmission scheme or the third transmission scheme.

In some embodiments, the third information includes a DMRS port indication field, and a value indicated by the DMRS port indication field indicates a DMRS port from a DMRS port table indicated by the second information.

In some embodiments, a number of bits of the DMRS port indication field is determined based on a DMRS port table indicated by the second information.

In some embodiments, a number of bits of the DMRS port indication field is determined based on a preset number of bits; or a number of bits of the DMRS port indication field is configured by the network device.

In some embodiments, fifth information is received, and the fifth information indicates an available number of rows of the DMRS port table from the DMRS port table, and a value indicated by the DMRS port indication field indicates a DMRS port from the available number of rows of the DMRS port table.

In the embodiments of the present disclosure, by receiving the indication information, the terminal determines the DMRS port of the first type of DMRS or the second type of DMRS allocated to the terminal by the network device, so that the terminal may determine the DMRS port used for transmitting data, thus correctly performing channel estimation and data demodulation, and improving accuracy of the channel estimation.

FIG. 4 is a flowchart of a method for indicating a DMRS port according to an exemplary embodiment. As shown in FIG. 4, the method for indicating a DMRS port is used in a network device, and includes a following step at S31.

At S31, indication information is sent.

For an optional implementation of S31, reference may be made to optional implementations of S11 and S12 in FIG. 2, and other related parts in the embodiments associated with FIG. 2, which will not be repeated here.

In some embodiments, the DMRS port corresponds to a first type of DMRS or a second type of DMRS.

In some embodiments, the first type of DMRS and the second type of DMRS use different OCC lengths in the frequency domain.

In some embodiments, first information is sent, and the first information indicates that the DMRS is the second type of DMRS.

In some embodiments, the first type of DMRS uses a second-order OCC in the frequency domain, and the second type of DMRS uses a fourth-order OCC in the frequency domain.

**In** some embodiments, the indication information indicates a DMRS port from different DMRS port tables, and the different DMRS port tables are determined based on a transmission scheme of the terminal.

In some embodiments, the indication information includes second information and third information, the second information indicates a DMRS port table, and the third information indicates a DMRS port from the DMRS port table.

In some embodiments, the transmission scheme includes a first transmission scheme, a second transmission scheme or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on MTRPs; and the third transmission scheme is a coherent joint transmission scheme based on MTRPs, and a same data layer is mapped to different TRPs in the coherent joint transmission scheme based on MTRPs.

In some embodiments, the first transmission scheme corresponds to a first DMRS port table, the second transmission scheme corresponds to a second DMRS port table, and the third transmission scheme corresponds to a third DMRS port table.

In some embodiments, the first transmission scheme and the third transmission scheme correspond to a first DMRS port table, and the second transmission scheme corresponds to a second DMRS port table.

In some embodiments, the first transmission scheme corresponds to a first DMRS port table, and the second transmission scheme and the third transmission scheme correspond to a second DMRS port table.

In some embodiments, the indication information includes fourth information, in which the fourth information indicates that the transmission scheme of the terminal is the second transmission scheme or the third transmission scheme.

**In** some embodiments, the third information includes a DMRS port indication field, and a value indicated by the DMRS port indication field indicates a DMRS port from a DMRS port table indicated by the second information.

In some embodiments, a number of bits of the DMRS port indication field is determined based on a DMRS port table indicated by the second information.

In some embodiments, a number of bits of the DMRS port indication field is determined based on a preset number of bits; or a number of bits of the DMRS port indication field is configured by the network device.

In some embodiments, fifth information is received, and the fifth information indicates an available number of rows of the DMRS port table from the DMRS port table, and a value indicated by the DMRS port indication field indicates a DMRS port from the available number of rows of the DMRS port table.

In the embodiments of the present disclosure, the network device indicates, via the indication information, the DMRS port of the first type of DMRS or the second type of DMRS allocated to the terminal, so that the terminal may determine the DMRS port used for transmitting data, thus correctly performing channel estimation and data demodulation, and improving accuracy of the channel estimation.

It needs to be noted that, those skilled in the art may understand that various implementations/embodiments involved in the above embodiments of the present disclosure may be used in combination with the above embodiments or may be used independently. Whether the implementation/embodiment is used independently or in combination with the above embodiments, the implementation principle is similar. In the embodiments of the present disclosure, some embodiments are described by an implementation used together. Certainly, those skilled in the art may understand that such examples are not limitations to the embodiments of the present disclosure.

Based on a same concept, the embodiments of the present disclosure further provide an apparatus for indicating a DMRS port.

It may be understood that, to achieve the above functions, the apparatus for indicating a DMRS port provided by the embodiments of the present disclosure includes corresponding hardware structures and/or software modules for performing each function. In combination with units and algorithm steps of the examples disclosed in the embodiments of the present disclosure, the embodiments of the present disclosure may be implemented in a form of hardware or a combination of hardware and computer software. Whether a function is executed by hardware or by computer software driving hardware depends on a specific application and a design constraint of the technical solution. Those skilled in the art may use different methods for each specific application to implement described functions, but such implementations should not be considered beyond the scope of the technical solution of the embodiments of the present disclosure.

FIG. 5 is a block diagram of an apparatus for indicating a DMRS port according to an exemplary embodiment. Referring to FIG. 5, the apparatus includes a receiving module 101.

The receiving module 101 is configured to receive indication information, in which the indication information indicates the DMRS port allocated to the terminal by a network device; the DMRS port corresponds to a first type of DMRS or a second type of DMRS; and the first type of DMRS and the second type of DMRS use OCCs of different lengths in a frequency domain.

In an implementation, the receiving module 101 is further configured to receive first information, in which the first information indicates the second type of DMRS, and the DMRS port corresponds to the second type of DMRS.

In an implementation, the first type of DMRS uses a second-order OCC in the frequency domain, and the second type of DMRS uses a fourth-order OCC in the frequency domain.

In an implementation, the indication information further indicates a DMRS port from different DMRS port tables, and the different DMRS port tables are determined based on a transmission scheme of the terminal.

In an implementation, the indication information includes second information and third information, the second information indicates a DMRS port table, and the third information indicates a DMRS port from the DMRS port table.

In an implementation, the transmission scheme includes a first transmission scheme, a second transmission scheme or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on MTRPs; and the third transmission scheme is a coherent joint transmission scheme based on MTRPs, and a same data layer is mapped to different TRPs in the coherent joint transmission scheme based on MTRPs.

In an implementation, the first transmission scheme corresponds to a first DMRS port table, the second transmission scheme corresponds to a second DMRS port table, and the third transmission scheme corresponds to a third DMRS port table; or the first transmission scheme and the third transmission scheme correspond to a first DMRS port table, and the second transmission scheme corresponds to a second DMRS port table; or the first transmission scheme corresponds to a first DMRS port table, and the second transmission scheme and the third transmission scheme correspond to a second DMRS port table.

In an implementation, the indication information further includes fourth information, in which the fourth information indicates that the transmission scheme of the terminal is the second transmission scheme or the third transmission scheme.

In an implementation, the third information includes a DMRS port indication field; a number of bits of the DMRS port indication field is determined based on a DMRS port table indicated by the second information; or a number of bits of the DMRS port indication field is determined based on a preset number of bits; or a number of bits of the DMRS port indication field is configured by the network device.

In an implementation, the receiving module 101 is further configured to receive fifth information, in which the fifth information indicates an available number of rows of the DMRS port table from the DMRS port table, and a value indicated by the DMRS port indication field indicates a DMRS port from the available number of rows of the DMRS port table.

FIG. 6 is a block diagram of an apparatus for indicating a DMRS port according to an exemplary embodiment. Referring to FIG. 6, the apparatus includes a sending module 201.

The sending module 201 is configured to send indication information, in which the indication information indicates the DMRS port allocated to a terminal by the network device; the DMRS port corresponds to a first type of DMRS or a second type of DMRS; and the first type of DMRS and the second type of DMRS use OCCs of different lengths in a frequency domain.

In an implementation, the sending module 201 is further configured to send first information, in which the first information indicates the second type of DMRS, and the DMRS port corresponds to the second type of DMRS.

In an implementation, the first type of DMRS uses a second-order OCC in the frequency domain, and the second type of DMRS uses a fourth-order OCC in the frequency domain.

In an implementation, the indication information further indicates a DMRS port from different DMRS port tables, and the different DMRS port tables are determined based on a transmission scheme of the terminal.

In an implementation, the indication information includes second information and third information, the second information indicates a DMRS port table, and the third information indicates a DMRS port from the DMRS port table.

**In** an implementation, the transmission scheme includes a first transmission scheme, a second transmission scheme, or a third transmission scheme; in which the first transmission scheme is a transmission scheme based on a single TRP; the second transmission scheme is a non-coherent joint transmission scheme based on MTRPs, and different data layers are mapped to different TRPs in the non-coherent joint transmission scheme based on MTRPs; and the third transmission scheme is a coherent joint transmission scheme based on MTRPs, and a same data layer is mapped to different TRPs in the coherent joint transmission scheme based on MTRPs.

In an implementation, the first transmission scheme corresponds to a first DMRS port table, the second transmission scheme corresponds to a second DMRS port table, and the third transmission scheme corresponds to a third DMRS port table; or the first transmission scheme and the third transmission scheme correspond to a first DMRS port table, and the second transmission scheme corresponds to a second DMRS port table; or the first transmission scheme corresponds to a third DMRS port table, and the second transmission scheme and the third transmission scheme correspond to a fourth DMRS port table.

In an implementation, the indication information further includes fourth information, in which the fourth information indicates that the transmission scheme of the terminal is the second transmission scheme or the third transmission scheme.

In an implementation, the third information includes a DMRS port indication field; a number of bits of the DMRS port indication field is determined based on a DMRS port table indicated by the second information; or a number of bits of the DMRS port indication field is determined based on a preset number of bits; or a number of bits of the DMRS port indication field is configured by the network device.

In an implementation, the sending module 201 is further configured to send fifth information, the fifth information indicates an available number of rows of the DMRS port table from the DMRS port table, and a value indicated by the DMRS port indication field indicates a DMRS port from the available number of rows of the DMRS port table.

Regarding the apparatus in the above embodiments, specific ways in which various modules perform operations have been described in detail in the embodiments related to the method, and will not be repeated here.

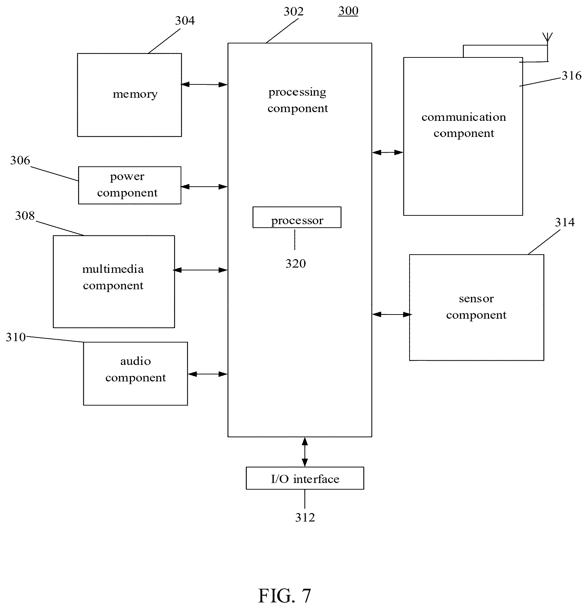

FIG. 7 is a block diagram of an apparatus for indicating a DMRS port according to an exemplary embodiment. For example, the apparatus 300 may be a mobile phone, a computer, a digital broadcasting terminal, a message sending and receiving equipment, a game controller, a tablet device, a medical device, a fitness equipment, a personal digital assistant or the like.

Referring to FIG. 7, the apparatus 300 may include one or more of following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For example, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the apparatus 300 and the user. In some embodiments, the screen may include a liquid crystal display (LCD) and a touch panel (TP). If the screen includes the TP, the screen may be implemented as a touch screen to receive input signals from the user. The TP includes one or more touch sensors to sense touches, swipes, and gestures on the TP. The touch sensor may not only sense a boundary of a touch or swipe action, but also sense a period of time and a pressure associated with the touch or swipe action. In some embodiments, the multimedia component 308 includes a front camera and/or a rear camera. The front camera and the rear camera may receive external multimedia data while the apparatus 300 is in an operation mode, such as a photographing mode or a video mode. Each of the front camera and the rear camera may be a fixed optical lens system or may have a focus and optical zoom capability.

The audio component 310 is configured to output and/or input audio signals. For example, the audio component 310 includes a microphone (MIC) configured to receive an external audio signal when the apparatus 300 is in an operation mode, such as a call mode, a recording mode, and a voice recognition mode. A received audio signal may be further stored in the memory 304 or sent via the communication component 316. In some embodiments, the audio component 310 further includes a speaker to output the audio signal.

The I/O interface 312 provides an interface between the processing component 302 and peripheral interface modules, such as a keyboard, a click wheel, buttons, and the like. The buttons may include, but be not limited to, a home button, a volume button, a starting button, and a locking button.

The sensor component 314 includes one or more sensors to provide status assessments of various aspects of the apparatus 300. For example, the sensor component 314 may detect an open/closed status of the apparatus 300, relative positioning of components, e.g., the display and the keypad of the apparatus 300, a change in position of the apparatus 300 or a component of the apparatus 300, a presence or absence of user contaction with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 may access a wireless network based on a communication standard, such as Wi-Fi, 2G, or 3G, or a combination thereof. In one exemplary embodiment, the communication component 316 receives a broadcast signal or broadcast associated information from an external broadcast management system via a broadcast channel. In one exemplary embodiment, the communication component 316 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

**In** exemplary embodiments, there is also provided a non-transitory computer readable storage medium including instructions, such as included in the memory 304, executable by the processor 320 in the apparatus 300, for performing the above methods. For example, the non-transitory computer-readable storage medium may be a ROM, a RAM, a CD-ROM, a magnetic tape, a floppy disc, an optical data storage device, and the like.

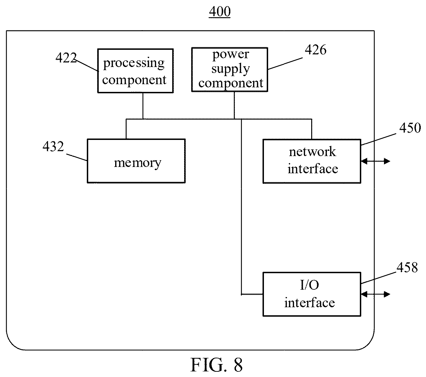

FIG. 8 is a block diagram of an apparatus for indicating a DMRS port according to an exemplary embodiment. For example, the apparatus 400 is provided as a network device. Referring to FIG. 8, the apparatus 400 includes a processing component 422 including one or more processors and a memory resource represented by a memory 432. The memory 432 is configured to store instructions executable by the processing component 422, such as an application program. The application program stored in the memory 432 may include one or more modules, in which each corresponds to a set of instructions. In addition, the processing component 422 is configured to execute instructions so as to implement the above method.

The apparatus 400 may also include a power component 426 configured to perform power management of the apparatus 400, a wired or wireless network interface 450 configured to connect the apparatus 400 to a network, and an input/output (I/O) interface 458. The apparatus 400 may operate an operating system stored in the memory 432, such as Windows Server^{™}, Mac OS X^{™}, Unix^{™}, Linux^{™}, FreeBSD^{™} or similar operating systems.

**In** exemplary embodiments, the embodiments of the present disclosure also provide a non-transitory computer readable storage medium including instructions, such as the memory 432 for storing instructions. When the instructions are executed by the processing component 422 of the apparatus 400, the above method is implemented. For example, the non-transitory computer readable storage medium may be a ROM, a random access memory (RAM), a compact disc read-only memory (CD-ROM), a magnetic tape, a floppy disk, an optical data storage device, etc.

It may be understood that the term "a plurality of" in the present disclosure refers to two or more than two, and other quantifiers are similar to it. The term "and/or" describes the relationship between associated objects, indicating that there may be three relationships, for example, A and/or B means A, A and B at the same time, and B. The character "/" generally indicates that the relationship between associated objects is an "or" relationship. The terms "a/an" and "the" in singular form also include plural forms, unless the context clearly indicates other meanings.

Furthermore, it may be understood that meanings of terms such as "in response to" or "if" involved in the present disclosure depend on the context and the actual usage scenario. For example, the term "in response to" as used herein may be interpreted as "when" , "in a case that..." or "if".

Furthermore, it may be understood that terms such as "first" and "second" are used to describe various types of information, but the information should not be limited by these terms. These terms are only used to distinguish information of the same type from each other and do not indicate a specific order or a level of importance. In fact, expressions such as "first" and "second" may be used interchangeably. For example, without departing from the scope of the present disclosure, first information may also be referred to as second information, and similarly, second information may also be referred to as first information.

Furthermore, it may be understood that, although operations are described in a particular order in the accompanying drawings, it may not be understood as requiring these operations be performed in a particular order or in serial order, or requiring all the operations shown to be performed in order to obtain a desirable result. In a given environment, multitasking and parallel processing may be advantageous.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein. It is intended that the specification and examples be considered as exemplary only, with a true scope and spirit of the present disclosure being indicated by the following claims.

It may be understood that the present disclosure is not limited to the precise structure described above and shown in the accompanying drawings, and various modifications and alterations may be made without going beyond the scope of the present disclosure. Therefore, the protection scope of the disclosure shall be subject to claims.

## Claims

1. A method for indicating a demodulation reference signal (DMRS) port, performed by a terminal, comprising:
receiving indication information, wherein the indication information indicates the DMRS port allocated to the terminal by a network device;
the DMRS port corresponds to a first type of DMRS or a second type of DMRS; and
the first type of DMRS and the second type of DMRS use orthogonal cover codes (OCCs) of different lengths in a frequency domain.

2. The method of claim 1, further comprising:
receiving first information, wherein the first information indicates the second type of DMRS, and the DMRS port corresponds to the second type of DMRS.

3. The method of claim 2, wherein the first type of DMRS uses a second-order OCC in the frequency domain, and the second type of DMRS uses a fourth-order OCC in the frequency domain.

4. The method of any one of claims 1 to 3, wherein the indication information further indicates a DMRS port from different DMRS port tables, and the different DMRS port tables are determined based on a transmission scheme of the terminal.

5. The method of claim 4, wherein the indication information comprises second information and third information, the second information indicates a DMRS port table, and the third information indicates a DMRS port from the DMRS port table.

6. The method of claim 4 or 5, wherein the transmission scheme comprises a first transmission scheme, a second transmission scheme or a third transmission scheme;
wherein the first transmission scheme is a transmission scheme based on a single transmission-reception point (TRP);
the second transmission scheme is a non-coherent joint transmission scheme based on multi TRPs (MTRPs), and different data layers are mapped to different TRPs in the non-coherent joint transmission scheme based on the MTRPs; and
the third transmission scheme is a coherent joint transmission scheme based on MTRPs, and a same data layer is mapped to different TRPs in the coherent joint transmission scheme based on the MTRPs.

7. The method of any one of claims 4 to 6, wherein the first transmission scheme corresponds to a first DMRS port table, the second transmission scheme corresponds to a second DMRS port table, and the third transmission scheme corresponds to a third DMRS port table; or
the first transmission scheme and the third transmission scheme correspond to a first DMRS port table, and the second transmission scheme corresponds to a second DMRS port table; or
the first transmission scheme corresponds to a first DMRS port table, and the second transmission scheme and the third transmission scheme correspond to a second DMRS port table.

8. The method of claim 7, wherein the second transmission scheme and the third transmission scheme correspond to the second DMRS port table;
the indication information further comprises fourth information, wherein the fourth information indicates that the transmission scheme of the terminal is the second transmission scheme or the third transmission scheme.

9. The method of any one of claims 5 to 8, wherein the third information comprises a DMRS port indication field;
a number of bits of the DMRS port indication field is determined based on a DMRS port table indicated by the second information; or
a number of bits of the DMRS port indication field is determined based on a preset number of bits; or
a number of bits of the DMRS port indication field is configured by the network device.

10. The method of claim 9, wherein the number of bits of the DMRS port indication field is determined based on the preset number of bits, or the number of bits of the DMRS port indication field is configured by the network device;
the method further comprises:
receiving fifth information, wherein the fifth information indicates an available number of rows of the DMRS port table from the DMRS port table, and a value indicated by the DMRS port indication field indicates a DMRS port from the available number of rows of the DMRS port table.

11. A method for indicating a demodulation reference signal (DMRS) port, performed by a network device, comprising:
sending indication information, wherein the indication information indicates the DMRS port allocated to a terminal;
the DMRS port corresponds to a first type of DMRS or a second type of DMRS; and
the first type of DMRS and the second type of DMRS use orthogonal cover codes (OCCs) of different lengths in a frequency domain.

12. The method of claim 11, further comprising:
sending first information, wherein the first information indicates the second type of DMRS, and the DMRS port corresponds to the second type of DMRS.

13. The method of claim 11 or 12, wherein the first type of DMRS uses a second-order OCC in the frequency domain, and the second type of DMRS uses a fourth-order OCC in the frequency domain.

14. The method of any one of claims 11 to 13, wherein the indication information further indicates a DMRS port from different DMRS port tables, and the different DMRS port tables are determined based on a transmission scheme of the terminal.

15. The method of claim 14, wherein the indication information comprises second information and third information, the second information indicates a DMRS port table, and the third information indicates a DMRS port from the DMRS port table.

16. The method of claim 14 or 15, wherein the transmission scheme comprises a first transmission scheme, a second transmission scheme, or a third transmission scheme;
wherein the first transmission scheme is a transmission scheme based on a single transmission-reception point (TRP);
the second transmission scheme is a non-coherent joint transmission scheme based on multi TRPs (MTRPs), and different data layers are mapped to different TRPs in the non-coherent joint transmission scheme based on the MTRPs; and
the third transmission scheme is a coherent joint transmission scheme based on MTRPs, and a same data layer is mapped to different TRPs in the coherent joint transmission scheme based on the MTRPs.

17. The method of any one of claims 14 to 16, wherein
the first transmission scheme corresponds to a first DMRS port table, the second transmission scheme corresponds to a second DMRS port table, and the third transmission scheme corresponds to a third DMRS port table; or
the first transmission scheme and the third transmission scheme correspond to a first DMRS port table, and the second transmission scheme corresponds to a second DMRS port table; or
the first transmission scheme corresponds to a first DMRS port table, and the second transmission scheme and the third transmission scheme correspond to a second DMRS port table.

18. The method of claim 17, wherein the first transmission scheme corresponds to the first DMRS port table, and the second transmission scheme and the third transmission scheme correspond to the second DMRS port table;
the indication information further comprises fourth information, wherein the fourth information indicates that the transmission scheme of the terminal is the second transmission scheme or the third transmission scheme.

19. The method of any one of claims 15 to 18, wherein the third information comprises a DMRS port indication field;
a number of bits of the DMRS port indication field is determined based on a DMRS port table indicated by the second information; or
a number of bits of the DMRS port indication field is determined based on a preset number of bits; or
a number of bits of the DMRS port indication field is configured by the network device.

20. The method of claim 19, wherein the number of bits of the DMRS port indication field is determined based on the preset number of bits, or the number of bits of the DMRS port indication field is configured by the network device;
the method further comprises:
receiving fifth information, wherein the fifth information indicates an available number of rows of the DMRS port table from the DMRS port table, and a value indicated by the DMRS port indication field indicates a DMRS port from the available number of rows of the DMRS port table.

21. An apparatus for indicating a demodulation reference signal (DMRS) port, comprising:
a receiving module, configured to receive indication information, wherein the indication information indicates the DMRS port allocated to the terminal by a network device;
the DMRS port corresponds to a first type of DMRS or a second type of DMRS; and
the first type of DMRS and the second type of DMRS use orthogonal cover codes (OCCs) of different lengths in a frequency domain.

22. An apparatus for indicating a demodulation reference signal (DMRS) port, comprising:
a sending module, configured to send indication information, wherein the indication information indicates the DMRS port allocated to a terminal;
the DMRS port corresponds to a first type of DMRS or a second type of DMRS; and
the first type of DMRS and the second type of DMRS use orthogonal cover codes (OCCs) of different lengths in a frequency domain.

23. A communication device, comprising:
a processor; and
a memory for storing processor-executable instructions,
wherein the processor is configured to implement the method of any one of claims 1 to 10, or the method of any one of claims 11 to 20.

24. A storage medium, wherein the storage medium stores instructions, when the instructions in the storage medium are executed by a processor of a terminal, the terminal is enable to implement the method of any one of claims 1 to 10; or when the instructions in the storage medium are executed by a processor of a network device, the network device is enable to implement the method of any one of claims 11 to 20.

25. A communication system, comprising a terminal and a network device, wherein
the terminal is configured to implement the method of any one of claims 1 to 10; and
the network device is configured to implement the method of any one of claims 11 to 20.
